# FASCICULE DE BREVET EUROPEEN

(11) **EP 2 019 896 B1**
(45) Date de publication et mention de la délivrance du brevet: **26.02.2014**
(21) Numéro de dépôt: 07765939.9
(22) Date de dépôt: 22.05.2007
(51) Int. Cl.: E05F 5/06, E04F 19/02, B64D 11/04, E06B 3/80

(54) **DISPOSITIF DE PROTECTION D'UNE PORTE**
TÜRSCHUTZVORRICHTUNG
DOOR PROTECTION DEVICE

(30) Priorité: 22.05.2006 FR 0604563; 21.07.2006 US 807937 P
(43) Date de publication de la demande: 04.02.2009
(73) Titulaire: Airbus, 31700 Blagnac Cedex (FR)
(72) Inventeur: LAVIE, Maxime, F-31560 Nailloux (FR)
(74) Mandataire: Petit, Maxime
(86) Numéro de dépôt international: PCT/FR2007/000861
(87) Numéro de publication internationale: WO 2007/135291

(56) Documents cités:
- DE-C1- 4 321 188
- GB-A- 2 157 362
- US-A- 1 842 734
- US-A- 3 858 357
- US-A- 5 858 287

## Description

La présente invention concerne un dispositif de protection d'une porte.

### DOMAINE TECHNIQUE

La présente invention se rapporte à tout type de porte, ouvrant et, de manière plus générale, à tout panneau permettant de fermer de manière totale ou partielle une ouverture.

De manière plus précise, la présente invention concerne des portes pivotantes contre lesquelles peuvent s'exercer divers types de chocs : chocs contre les parois vers lesquelles les portes basculent, chocs avec des objets mobiles projetés contre lesdites portes ou faisant obstacle avec la trajectoire de la porte, ou autres... L'intensité du choc mécanique et sonore dépend de la force avec laquelle la porte ou l'objet est entraîné. Le choc mécanique peut conduire à des détériorations des matériaux utilisés pour la finition de la porte: déformation, rayure, ou autres. Le choc sonore peut en outre occasionner une gêne chez les personnes se situant dans le voisinage de ladite porte.

Par ailleurs, dans les avions, le personnel de bord distribue des plateaux-repas aux passagers à l'aide de chariots repas. Les chariots sont conservés dans des compartiments aménagés dans un meuble de l'office, appelé ci-après le meuble. L'office d'un avion (en anglais « galley ») est la partie où la nourriture est stockée et préparée pendant le vol. Chaque compartiment dudit meuble est clos par une porte pivotante.

Il convient de noter que lorsque des altérations sont provoquées par la manipulation des portes desdits meubles ou celle des chariots (pouvant peser jusqu'à une centaine de kilos), ces dommages ne peuvent être réparés que pendant un temps déterminé : celui de l'escale. Les réparations sont donc difficiles et coûteuses.

De plus, les compagnies aériennes souhaitent une réparation rapide pour le confort visuel des passagers.

En outre, les compagnies désirent également réduire, voire supprimer, toutes les nuisances sonores accompagnant un vol. Ainsi, les chocs sonores provoqués avec la porte du meuble de l'office doivent être limités. Enfin, l'aspect esthétique d'une cabine est un point important : toute dégradation inesthétique du matériel doit être supprimée. L'allure extérieure des éléments constitutifs de la cabine fait partie des critères de choix pour les compagnies aériennes.

### TECHNIQUE ANTERIEURE

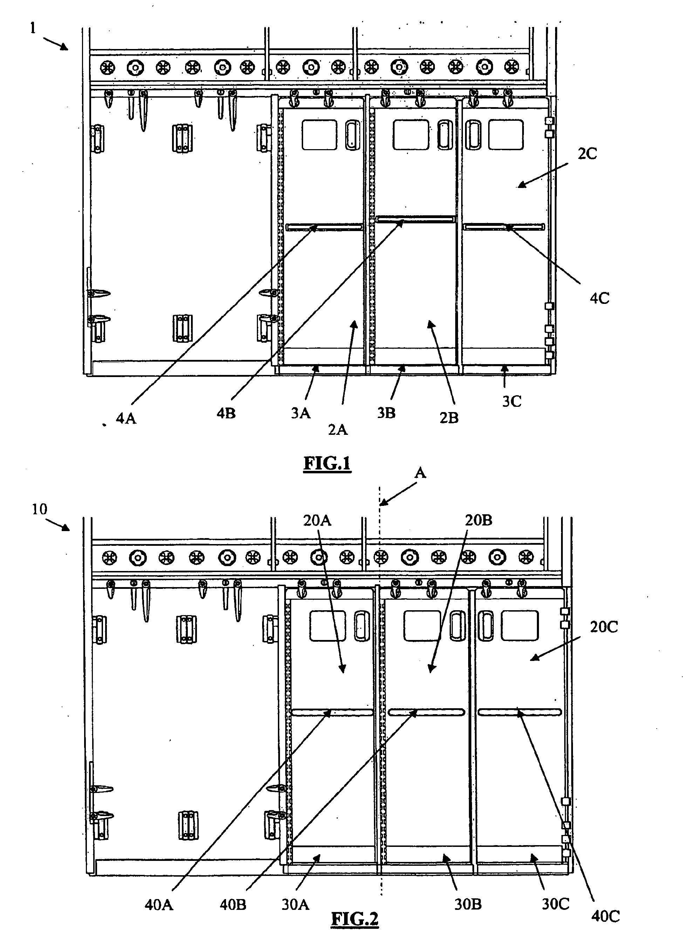

La figure 1 représente un type de meuble 1 existant équipant les offices des avions. Les portes 2 (2A, 2B, 2C) des compartiments 3 (respectivement 3A, 3B, 3C) du meuble sont communément pourvues de dispositifs 4 (respectivement 4A, 4B, 4C) de protection horizontaux constitués de matériaux thermoplastiques ou de caoutchouc.

Le personnel de bord accède aux chariots stockés à l'intérieur des compartiments 3 en ouvrant le plus largement possible les portes 2, idéalement avec un angle d'ouverture de 180°. Pour ce faire, les dispositifs 4A, 4B, et 4C de protection disposés respectivement sur chacune des portes des compartiments 3A, 3B et 3C sont décalés verticalement les uns par rapport aux autres et plus particulièrement, sont disposés à des hauteurs différentes sur chacune des portes. De cette manière, les dispositifs de protection ne peuvent pas se toucher et ne gênent pas l'ouverture complète des portes.

Cependant, comme le montre la figure 1, les différents dispositifs 4 de protection forment plusieurs lignes horizontales discontinues parallèles à toutes les autres lignes horizontales continues composant le meuble. L'absence d'alignement horizontal des dispositifs 4 de protection apporte une discontinuité inesthétique.

De plus, la forme rectangulaire des dispositifs 4 de protection offre une forme anguleuse pouvant freiner la course des chariots passant à proximité du meuble de l'office.

Enfin, l'intensité sonore de l'impact d'un dispositif 4 contre une porte 2 métallique est relativement importante et représente une gêne à bord.

Le document DE 4321188 décrit un ensemble selon le préambule de la revendication 1.

Un but de la présente invention est de proposer un nouveau dispositif de protection d'une porte permettant de conserver les avantages des dispositifs existants tout en offrant une ligne esthétique plus séduisante.

### EXPOSE DE l'INVENTION

Pour ce faire, la présente invention propose un dispositif de protection conforme à la revendication 1.

De cette manière, les deux parties en vis-à-vis du dispositif ne se gênent pas mutuellement lors de l'ouverture de la porte.

De plus, leur alignement suivant un même axe améliore l'esthétique de l'ensemble.

En outre, un tel agencement facilite la mise en place du dispositif sur la porte et la paroi.

L'invention s'applique ainsi à un ensemble formé d'une porte et d'une paroi à proximité l'une de l'autre.

Selon une forme particulière de l'invention, les deux parties s'emboîtent l'une dans l'autre de manière qu'en position totalement ouverte, la distance entre la porte et la paroi soit inférieure à la somme des épaisseurs desdites parties.

Selon une caractéristique, ladite au moins une saillie comprend une épaisseur qui varie suivant une direction parallèle à l'axe de pivotement de la porte.

Selon une forme de réalisation particulière, les deux parties comprennent des surfaces correspondantes ondulées. La symétrie des formes et la rondeur offertes par lesdites parties permet de ne pas bloquer la progression des chariots et de faciliter le glissement de ceux-ci le long des portes ou leur rebond sur les portes.

Selon une caractéristique, en position d'ouverture totale, les deux parties s'associent de manière à former une pièce pleine.

Selon une autre caractéristique, l'axe de pivotement de la porte est vertical et notamment le dispositif est agencé horizontalement, c'est-à-dire que les deux parties du dispositif sont alignées suivant le même axe horizontal.

Selon un autre aspect, l'invention vise un dispositif de protection d'une porte d'un compartiment, le dispositif étant celui brièvement exposé ci-dessus et la paroi contre laquelle la porte s'applique en position d'ouverture est constituée par une porte d'un compartiment voisin.

L'invention concerne également les portes équipées de ce type de dispositif ainsi que les meubles, par exemple les meubles de l'office d'un aéronef, équipés de telles portes.

Plus particulièrement, l'invention vise une porte pivotant autour d'un axe et destinée à s'appliquer en position d'ouverture contre une paroi, caractérisée en ce que ladite porte comporte une partie rapportée sur la surface extérieure de la porte et qui est destinée à s'emboîter dans une partie rapportée sur la paroi en position d'ouverture de ladite porte, la partie de la porte s'étendant suivant un axe de direction perpendiculaire à l'axe de pivotement de la porte.

L'invention a également pour objet un meuble qui comprend une porte telle que brièvement exposée ci-dessus et une paroi contre laquelle s'applique la porte en position d'ouverture.

### DESCRIPTION SOMMAIRE DES DESSINS

D'autres buts, avantages et caractéristiques de l'invention apparaîtront à la lecture de la description qui va suivre, donnée à titre d'exemple non limitatif en référence aux dessins annexés dans lesquels :
- la figure 1 est une vue de face d'un meuble pourvu de dispositifs de protection de type connu ;
- la figure 2 est une vue de face d'un meuble pourvu de dispositifs de protection selon la présente invention ;
- les figures 3 à 5 sont des vues de dessus illustrant de manière schématique différentes positions des portes d'un meuble équipées d'un dispositif selon la présente invention lors de l'ouverture de l'une d'entre elles, la figure 5 représentant la position d'ouverture complète de ladite porte;
- les figures 6 et 7 sont respectivement une vue de côté et de face d'une partie du dispositif de protection selon la présente invention.

### DESCRIPTION DETAILLEE DE L'INVENTION

Le dispositif de protection est présenté dans la description qui suit dans le cadre illustratif et non limitatif des meubles des offices dans les avions. Le dispositif de protection peut être utilisé dans toute autre application nécessitant une protection mécanique et/ou sonore d'une porte s'ouvrant contre une paroi (mur, autre porte ou autre).

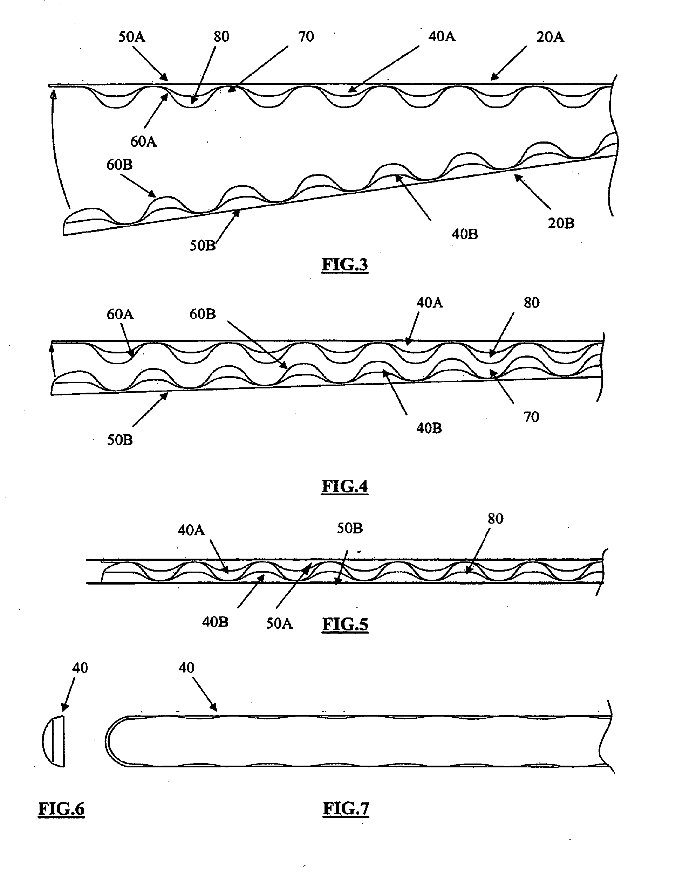

Comme le montre la figure 2, les meubles 10 équipant les offices des avions comprennent des compartiments 30 (30A, 30B, 30C) adjacents deux à deux, de forme parallélépipédique rectangle et dans lesquels sont conservés des chariots repas. Les chariots supportent des plateaux repas destinés aux passagers. Les compartiments 30 permettent de maintenir les plateaux à une température de conservation choisie. Les compartiments voisins 30 (30A, 30B, 30C) sont clos chacun par une porte 20 (respectivement 20A, 20B, 20C) pivotant autour d'un axe vertical. La direction verticale est considérée dans la présente description comme la direction perpendiculaire à celle du sol sur lequel repose le meuble 10. Sur la figure 2, le compartiment 30B est clos par une porte 20B pivotant autour d'un axe vertical A. La porte 20B pivote entre une position de fermeture, représentée sur la figure 2 et dans laquelle le compartiment est clos, et une position d'ouverture totale dans laquelle la porte 20B est en contact avec la porte 20A du compartiment 30A voisin (figure 5).

Des dispositifs 40A, 40B, 40C de protection selon l'invention sont rapportés respectivement sur la surface extérieure des portes 20A, 20B et 20C des compartiments 30A, 30B et 30C. La surface extérieure d'une porte, de la porte 20B par exemple, est la surface visible par le personnel de bord ; c'est également la surface destinée à s'appliquer, en position d'ouverture du compartiment concerné, contre une paroi, dans le cas présent contre la porte 20A. Un dispositif 40 de protection s'étend principalement suivant une forme générale allongée et est constitué d'un profilé de forme longiligne. La forme longitudinale du dispositif 40 est disposée horizontalement et parallèlement aux bords horizontaux supérieurs et inférieurs de la porte 20.

Comme représenté sur les figures 3 à 5, le dispositif 40 comprend deux parties 40A et 40B : une partie 40B rapportée sur la surface extérieure de la porte 20B et une partie 40A rapportée sur la paroi 20A vers laquelle la porte 20B pivote. En position d'ouverture de la porte 20B, les parties 40A et 40B s'emboîtent l'une dans l'autre, permettant ainsi d'ouvrir davantage la porte 20B.

Dans la présente forme de réalisation illustrée sur la figure 2, la paroi est constituée par la porte 20A du meuble 1. Comme le montrent les figures 3 à 5, la surface 50A, 50B respective de chaque partie 40A et 40B du dispositif 40 respectivement accolée à la porte et à la paroi est plane pour faciliter la fixation des parties 40A et 40B respectivement sur les portes 20A et 20B. Cette fixation est réalisée par tout type de moyen connu (collage, vissage et/ou autre).

La surface 60A, 60B de chaque partie 40A et 40B du dispositif 40, opposée à la surface 50A, 50B, est la surface destinée à reposer, en position d'ouverture, respectivement contre la surface 60B, 60A de la partie 40B, 40A correspondante. Dans la forme illustrée sur les figures 3 à 5, le dispositif 40 comprend au niveau de la surface 60, une succession de creux 70 et de saillies 80.

Les creux et/ou les saillies respectivement de la partie 40A et de la partie 40B présentent des formes complémentaires. En position d'ouverture complète, les formes complémentaires s'associent pour constituer une pièce d'épaisseur inférieure à la somme des épaisseurs des parties 40A et 40B comme représenté sur la figure 5. L'épaisseur d'une partie 40A (respectivement 40B) est la distance orthogonale maximale existant entre la surface 50A (respectivement 50B) et la surface 60A (respectivement 60B). Ainsi, en position d'ouverture complète, les parties 40A et 40B se complètent de manière que la distance orthogonale maximale entre la surface 50A de la partie 40A et la surface 50B de la partie 40B soit inférieure à la somme des épaisseurs des parties 40A et 40B. En particulier cette distance est inférieure à la double épaisseur de dispositifs 4 de type connu tels que celui représenté sur la figure 1 et qui se superposent dans le cas d'un alignement horizontal de ces dispositifs 4 sur chacune des portes 2A, 2B et 2C. En effet, les dispositifs 4 de type connu sont des baguettes parallélépipédiques rectangles pleines homogènes telles que la surface 6 opposée à la surface 5 rapportée à la porte de ladite baguette est plane. De ce fait, en position d'ouverture, les baguettes se trouvant en vis à vis gênent l'ouverture complète de la porte.

Dans la forme de réalisation représentée sur la figure 5, en position d'ouverture, les parties 40A et 40B forment ensemble une pièce sensiblement de l'épaisseur d'un seul dispositif 4 de type existant (tel que représenté sur la figure 1). Plus précisément, les parties 40A et 40B, en position d'ouverture de la porte 20B, forment un profilé d'épaisseur pratiquement équivalente à l'épaisseur la plus grande d'une saillie d'une partie 40A ou 40B.

De cette manière, les parties 40A et 40B sont disposées sur un même axe perpendiculaire à l'axe de pivotement de la porte 20B, en l'occurrence horizontal. Il n'est donc plus nécessaire de les décaler le long de l'axe de pivotement, c'est-à-dire verticalement, pour éviter qu'elles se rencontrent lors de l'ouverture de la porte et constituent une surépaisseur limitant le débattement de la porte. Les parties de formes complémentaires du dispositif peuvent ainsi être rapportées à des hauteurs identiques sur les portes du meuble, ce qui facilite leur positionnement. De plus, la présente invention améliore l'allure esthétique du meuble de l'office en offrant des lignes continues, donc plus harmonieuses.

Les creux et saillies peuvent présenter tout type de formes permettant l'interpénétration des deux parties 40A et 40B du dispositif 40. Ainsi, la saillie présente, par exemple, une forme rectangulaire pour une surface crénelée ou en peigne, une forme triangulaire, une forme semi-circulaire, ovale ou autre. La surface 60 peut également présenter une forme complexe dès l'instant où elle entre en correspondance avec la surface contre laquelle elle s'applique en position d'ouverture et où elle répond aux caractéristiques d'emboîtement précédemment décrites.

Dans la forme de réalisation illustrée sur les figures 3 à 7, les creux et saillies sont de forme arrondie et forment ainsi une surface 60 ondulée. La forme arrondie présente l'avantage de n'offrir que peu de frottements lors de la course d'un chariot parallèlement au meuble. La forme de la surface 60 permet de faire glisser ou rebondir le chariot sur les portes du meuble suivant l'angle d'attaque du chariot par rapport aux portes.

Dans la forme de réalisation illustrée sur les figures 3 à 5, chacune des saillies 80 présente une épaisseur variable verticalement et, par exemple, plusieurs épaisseurs : une épaisseur maximale au centre de la saillie et des épaisseurs inférieures à l'épaisseur maximale sur les bords supérieurs et inférieurs. Cette variation d'épaisseur est visible sur la figure 7 qui est une vue de face d'une partie 40 du dispositif. Le creux prévu en correspondance de la saillie épouse la surface de la portion centrale d'épaisseur maximale de la saillie mais ne comprend pas, dans la forme de réalisation illustrée, de portions concaves en bordure pour épouser les contours des portions supérieures et inférieures d'épaisseur inférieure de la saillie.

Ainsi, tout type de surface peut être prévu avec des emboîtements horizontaux, verticaux ou autres.

La figure 6 représente le dispositif 40 vu de côté et montre le profil semi-oval des saillies des parties 40A et 40B.

Les parties constitutives du dispositif 40 sont constituées chacune d'un matériau amortisseur tel qu'un matériau thermoplastique, un élastomère ou autre. Le matériau amortisseur utilisé apporte de nombreux avantages :
- amortir les chocs entre les portes ;
- amortir les chocs provenant de chariots repas manipulés au voisinage des portes ; les dispositifs permettent également, de par leur élasticité, d'éloigner les chariots par rebond ;
- la surface lisse offerte par ce type de matériau permet aux parties du dispositif réalisées dans ce matériau de ne pas constituer des obstacles ou de générer des frottements susceptibles de gêner la progression des chariots.

Par ailleurs, le matériau utilisé est un matériau d'amortissement mécanique mais également sonore. En effet, le choc entre portes intervient précisément entre deux dispositifs de protection et non plus entre un dispositif de protection et une porte métallique. Le niveau sonore du choc s'en trouve donc réduit.

## Revendications

1. Ensemble comprenant une porte (20B) pivotant autour d'un axe, une paroi (20A) et un dispositif de protection de la porte s'appliquant en position d'ouverture contre la paroi (20A), le dispositif de protection comportant une partie (40B) rapportée sur la surface extérieur de la porte (20B) et une partie (40A) rapportée sur la parol, de manière qu'en position d'ouverture de la porte les parties s'emboîtent l'une dans l'aitre, caractérisé ce que le dispositif de protection s'étend suivant une forme générale allongée tel un profilé de forme longiligne, les deux parties du dispositif étant alignées longitudinalement suivant un même axe longitudinal de direction perpendiculaire à l'axe de pivotement de la porte, les deux parties présentant des surfaces comprenant en correspondance une succession de creux et de saillies selon ledit axe longitudinal des parties.

2. Ensemble selon la revendication 1, **caractérisé en ce que** les deux parties s'emboîtent l'une dans l'autre de manière qu'en position totalement ouverte, la distance entre la porte et la paroi soit inférieure à la somme des épaisseurs des parties (40A) et (40B).

3. Ensemble selon l'une des revendications 1 à 2, **caractérisé en ce que** ladite au moins une saillie comprend une épaisseur qui varie suivant une direction parallèle à l'axe de pivotement de la porte.

4. Ensemble selon l'une des revendications 1 à 3, **caractérisé en ce que** les parties (40A) et (40B) comprennent des surfaces correspondantes ondulées.

5. Ensemble selon l'une des revendications 1 à 4, **caractérisé en ce qu'**en position d'ouverture totale, les deux parties s'associent de manière à former une pièce pleine.

6. Ensemble selon l'une des revendications 1 à 5, **caractérisé en ce que** l'axe de pivotement de la porte est vertical.

7. Ensemble selon la revendication 6, **caractérisé en ce que** le dispositif est agencé horizontalement.

8. Ensemble selon l'une des revendications 1 à 7, **caractérisé en ce que** les parties constituées du dispositif de protection sont constituées d'un matériau amortisseur.

9. Ensemble selon l'une des revendications 1 à 8, **caractérisé en ce que** les deux parties (40B, 40A) du dispositif s'emboîtent l'une dans l'autre grâce à une épaisseur qui s'étend dans une direction perpendiculaire à la surface extérieure de la porte (20B) et à la paroi (20A).

10. Ensemble selon l'une des revendications 1 à 9, **caractérisé en ce que** la porte (20B) est la porte d'un compartiment (30B) et la paroi (20A) est constituée par une porte (20A) d'un compartiment (30A) voisin.

11. Ensemble selon l'une des revendications 1 à 10, **caractérisé en ce qu'**il comprend un meuble ayant la porte (20B) comme porte.

12. Ensemble selon la revendication 11, **caractérisé en ce que** le meuble est un meuble d'office d'un aéronef.

13. Aéronef, **caractérisé en ce qu'**il comprend un ensemble selon l'une des revendications 1 à 12.

## Patentansprüche

1. Anordnung, umfassend eine um eine Achse schwenkbare Tür (20B), eine Wand (20A) und eine Vorrichtung zum Schutz der Tür, die in Öffnungsstellung an der Wand (20A) anliegt, wobei die Schutzvorrichtung einen Teil (40B), der an die Außenfläche der Tür (20B) angesetzt ist, und einen Teil (40A), der an die Wand angesetzt ist, umfasst, so dass in Öffnungsstellung der Tür die Teile ineinandergreifen, **dadurch gekennzeichnet, dass** die Schutzvorrichtung entlang einer allgemein langgestreckten Form, wie eines Profils langgezogener Form, verläuft, wobei die beiden Teile der Vorrichtung in Längsrichtung entlang einer gleichen Längsachse mit einer zur Schwenkachse der Tür senkrechten Richtung ausgerichtet sind, wobei die beiden Teile Oberflächen aufweisen, die in Übereinstimmung eine Folge von Vertiefungen und Vorsprüngen entlang der Längsachse der Teile umfassen.

2. Anordnung nach Anspruch 1, **dadurch gekennzeichnet, dass** die beiden Teile derart ineinandergreifen, dass in vollständig geöffneter Stellung der Abstand zwischen der Tür und der Wand geringer als die Summe der Dicken der Teile (40A) und (40B) ist.

3. Anordnung nach einem der Ansprüche 1 bis 2, **dadurch gekennzeichnet, dass** der wenigstens eine Vorsprung eine Dicke aufweist, die entlang einer zur Schwenkachse der Tür parallelen Richtung variiert.

4. Anordnung nach einem der Ansprüche 1 bis 3, **dadurch gekennzeichnet, dass** die Teile (40A) und (40B) entsprechende gewellte Oberflächen aufweisen.

5. Anordnung nach einem der Ansprüche 1 bis 4, **dadurch gekennzeichnet, dass** in vollständiger Öffnungsstellung die beiden Teile sich derart miteinander verbinden, dass sie ein massives Teil bilden.

6. Anordnung nach einem der Ansprüche 1 bis 5, **dadurch gekennzeichnet, dass** die Schwenkachse der Tür vertikal ist.

7. Anordnung nach Anspruch 6, **dadurch gekennzeichnet, dass** die Vorrichtung horizontal angeordnet ist.

8. Anordnung nach einem der Ansprüche 1 bis 7, **dadurch gekennzeichnet, dass** die von der Schutzvorrichtung gebildeten Teile aus einem Dämpfungsmaterial ausgebildet sind.

9. Anordnung nach einem der Ansprüche 1 bis 8, **dadurch gekennzeichnet, dass** die beiden Teile (40B, 40A) der Vorrichtung aufgrund einer Dicke, die sich in einer zur Außenfläche der Tür (20B) und zur Wand (20A) senkrechten Richtung erstreckt, ineinandergreifen.

10. Anordnung nach einem der Ansprüche 1 bis 9, **dadurch gekennzeichnet, dass** die Tür (20B) die Tür eines Abteils (30B) ist und die Wand (20A) durch eine Tür (20A) eines benachbarten Abteils (30A) gebildet ist.

11. Anordnung nach einem der Ansprüche 1 bis 10, **dadurch gekennzeichnet, dass** sie ein Möbel umfasst, das die Tür (20B) als Tür aufweist.

12. Anordnung nach Anspruch 11, **dadurch gekennzeichnet, dass** das Möbel ein Bordküchenmöbel eines Luftfahrzeugs ist.

13. Luftfahrzeug, **dadurch gekennzeichnet, dass** es eine Anordnung nach einem der Ansprüche 1 bis 12 umfasst.

## Claims

1. Group comprising a door (20B) pivoting around an axis, a wall (20A) and a protection device of the door fitting in opening position against the wall (20A), the protection device comprising a part (40B) added into the outer surface of the door (20B) and a part (40A) added into the wall, so that in opening position of the door the parts fit into one another, **characterized in that** the protection device extends in a general elongated shape, such as a section of slender form, the two parts of the device being aligned along a same longitudinal axis in a direction perpendicular to the axis of pivoting of the door, the two parts comprising correspondingly a series of depressions and projections along the said longitudinal axis of the parts.

2. Group according to claim 1, **characterized in that** the two parts fit into one another so that in completely open position, the distance between the door and the wall is less than the sum of the thicknesses of the parts (40A) and (40B).

3. Group according to claim 1 or 2, **characterized in that** the said at least one projection comprises a thickness that varies along a direction parallel to the axis of pivoting of the door.

4. Group according to one of claims 1 to 3, **characterized in that** the parts (40A) and (40B) comprise corresponding corrugated surfaces.

5. Group according to one of claims 1 to 4, **characterized in that** in complete opening position, the two parts are joined together so as to form a solid component.

6. Group according to one of claims 1 to 5, **characterized in that** the axis of pivoting of the door is vertical.

7. Group according to claim 6, **characterized in that** the device is arranged horizontally.

8. Group according to claims 1 to 7, **characterized in that** the parts constituting the protection device are made up of a clamping material.

9. Group according to one of claims 1 to 8, **characterized in that** the two parts (40A, 40B) of the device fit into one another thanks a thickness extending along a direction perpendicular to the outer surface of the door (20B) and to the wall (20A).

10. Group according to one of claims 1 to 9, **characterized in that** the door (20B) is the door of a compartment (30B) and the wall (20A) is made up of a door (20A) of an adjacent compartment (30A).

11. Group according to one of claims 1 to 10, **characterized in that** it comprises a unit having the door (20B) as a door.

12. Group according to claim 11, **characterized in that** the unit is a galley unit of an aircraft.

13. Aircraft, **characterized in that** it comprises a group according to claims 1 to 12.
